(19)

Europäisches
Patentamt
European
Patent Office
Office européen
des brevets

(11)　　**EP 3 070 658 A1**

(12)　　**EUROPEAN PATENT APPLICATION**

(43) Date of publication:
　　21.09.2016　Bulletin 2016/38

(51) Int Cl.:
　　*G06Q 10/10* (2012.01)　　　*G06Q 10/06* (2012.01)

(21) Application number: 16160107.5

(22) Date of filing: 14.03.2016

(84) Designated Contracting States:
　　AL AT BE BG CH CY CZ DE DK EE ES FI FR GB
　　GR HR HU IE IS IT LI LT LU LV MC MK MT NL NO
　　PL PT RO RS SE SI SK SM TR
　　Designated Extension States:
　　BA ME
　　Designated Validation States:
　　MA MD

(30) Priority: 18.03.2015　JP 2015054207

(71) Applicant: FUJITSU LIMITED
　　Kawasaki-shi,
　　Kanagawa 211-8588 (JP)

(72) Inventors:
　　• Noma, Yui
　　　Kanagawa, 211-8588 (JP)
　　• Konoshima, Makiko
　　　Kanagawa, 211-8588 (JP)

(74) Representative: Hoffmann Eitle
　　Patent- und Rechtsanwälte PartmbB
　　Arabellastraße 30
　　81925 München (DE)

(54)　　**DATA CLASSIFYING PROGRAM, DATA CLASSIFYING METHOD, AND DATA CLASSIFYING DEIVCE**

(57)　　A data classifying device(100) performs processing request to first data groups stored in a database, obtains a parameter obtained from results of the performed processing for each data included in the first data group, and extracts a second data group from at least the plurality of first data groups based on a first similarity between the parameters and generates a third data group by classifying data included in the second data group so that second similarities between the parameters of the data included in the second data group are low and classifies the third data group to the first data group so that a third similarity between the parameters of the data included in a pair of the third data group and the first data group is low.

FIG.1

EP 3 070 658 A1

**Description**

FIELD

The embodiments discussed herein are related to a data classifying program and the like.

BACKGROUND

Collation processing and calculation of the similarity by using non-structural data such as an image, voice, and sensor data generally take long time. Therefore, there has been a conventional technology for efficiently performing the collation processing by allocating record data to a plurality of calculation resources and distributing the processing.

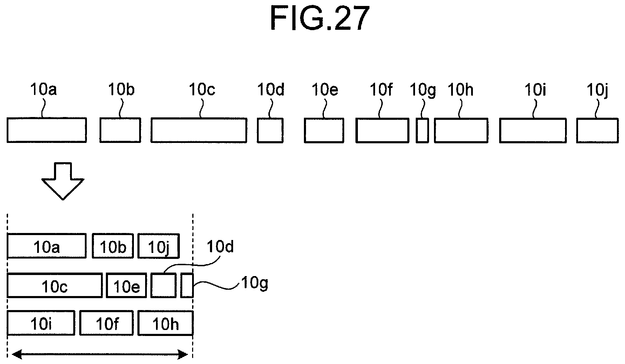

FIG. 27 is a diagram to describe an example of a related art. For example, when the record data is collated by using a query, there is a case where processing time does not depend on the query and depends on the record data. For example, when the number of seconds of a frequency component in a music file is counted, the processing time depends on the length of the music. In this case, the record data may be distributed to each calculation resource so that the processing is almost equal to each other by solving the mixed integer programming.

In the example illustrated in FIG. 27, record data 10a to 10j exist, and the length of each record data is a processing time to perform the processing to the record data. For example, the record data 10a, 10b, and 10j is distributed to a first server, and the record data 10c, 10e, 10d, and 10g is distributed to a second server. Also, the record data 10i, 10f, and 10h is distributed to a third server. By distributing the record data 10a to 10j in this way, each processing time can be equal. These related-art examples are described, for example, in Japanese Laid-open Patent Publication No. 2006-260511, Japanese Laid-open Patent Publication No. 2011-86019, Japanese Laid-open Patent Publication No. 2010-10847 and Japanese Laid-open Patent Publication No. 2001-160062.

However, in the above-mentioned related art, there has been a problem in that the record data with a long processing time are unable to be distributed and a database which can reduce time to perform the query data are unable to be constructed.

There is a case where the processing time does not depend on the record data and the processing time is fluctuated by a data pair of the query data and the record data. For example, when the query data is similar to the record data, the processing time to process the record data gets longer. Therefore, when a plurality of pieces of record data similar to the query data is collectedly arranged in a certain calculation resource, the processing time of the calculation resource gets longer.

Therefore, it is difficult to reduce the processing time of the calculation resource only by controlling not to arrange the record data which are similar to each other to the same calculation resource. Also, it can be considered that the processing time is observed by actually using the query data and the record data is sorted based on the observation result. However, it is difficult to determine the number of pieces of the query data of which the processing time is measured.

Accordingly, it is an object in one aspect of an embodiment of the invention to provide a data classifying program, a data classifying method, and a data classifying device which can construct a database to reduce time to perform query data.

SUMMARY

According to an aspect of an embodiment, a non-transitory computer-readable recording medium stores therein a data classifying program that causes a computer to execute a process including: performing processing request to first data groups stored in a database; obtaining a parameter obtained from results of the performed processing for each data included in the first data group; extracting a second data group from at least the plurality of first data groups based on a first similarity between the parameters; generating a third data group by classifying data included in the second data group so that second similarities between the parameters of the data included in the second data group are low; and classifying the third data group to the first data group so that a third similarity between the parameters of the data included in a pair of the third data group and the first data group is low.

BRIEF DESCRIPTION OF DRAWINGS

FIG. 1 is a diagram (1) to describe processing of a data classifying device according to the present embodiment;
FIG. 2 is a diagram (2) to describe the processing of the data classifying device according to the present embodiment;
FIG. 3 is a diagram (3) to describe the processing of the data classifying device according to the present embodiment;
FIG. 4 is a diagram (4) to describe the processing of the data classifying device according to the present embodiment;

FIG. 5 is a diagram (5) to describe the processing of the data classifying device according to the present embodiment;

FIG. 6 is a diagram of an exemplary data structure of an intermediate table;

FIG. 7 is a diagram (1) to describe the meaning of rearranging a new pair;

FIG. 8 a diagram (2) to describe the meaning of rearranging a new pair;

FIG. 9 is a diagram (1) to describe processing in a case where the pair is returned to a calculation resource;

FIG. 10 is a diagram (2) to describe processing in a case where the pair is returned to the calculation resource;

FIG. 11 is a diagram to describe a stable matching and an unstable matching;

FIG. 12 is a diagram of an exemplary processing procedure of the Gale-Shapley algorithm;

FIG. 13 is a flowchart of a processing procedure of an algorithm of a stable roommate problem;

FIG. 14 is a flowchart of a processing procedure of first phase processing;

FIG. 15 a flowchart of a processing procedure of second phase processing;

FIG. 16 is a flowchart of a processing procedure for searching for an all-or-nothing cycle;

FIG. 17 is a diagram (1) to describe processing in which the data classifying device obtains a stable room solution from each preference list;

FIG. 18 is a diagram (2) to describe the processing in which the data classifying device obtains the stable room solution from each preference list;

FIG. 19 is a diagram (3) to describe the processing in which the data classifying device obtains the stable room solution from each preference list;

FIG. 20 is a diagram (4) to describe the processing in which the data classifying device obtains the stable room solution from each preference list;

FIG. 21 is a diagram (5) to describe the processing in which the data classifying device obtains the stable room solution from each preference list;

FIG. 22 is a functional block diagram of a structure of the data classifying device according to the present embodiment;

FIG. 23 is a diagram of an exemplary data structure of a record data table;

FIG. 24 is a diagram of an exemplary data structure of arrangement destination information;

FIG. 25 is a flowchart of a processing procedure of the data classifying device according to the present embodiment;

FIG. 26 is a diagram of an exemplary computer for executing a data classifying program; and

FIG. 27 is a diagram to describe an example of a related art.

DESCRIPTION OF EMBODIMENTS

Preferred embodiments of the present invention will be explained with reference to accompanying drawings. The embodiments do not limit the invention.

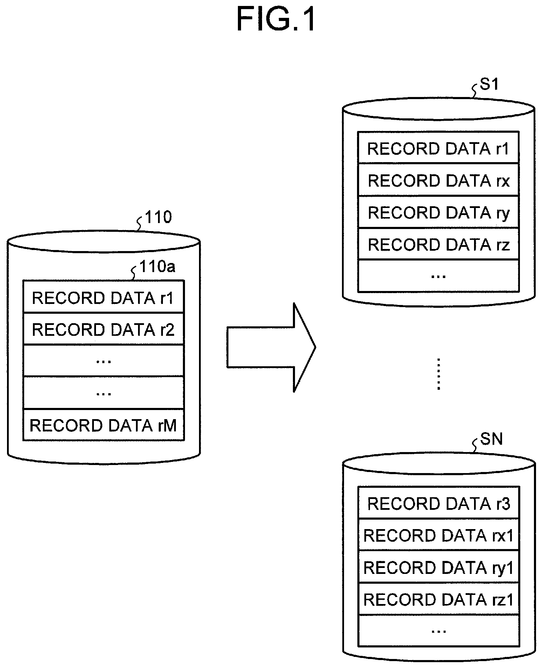

Exemplary processing of a data classifying device according to the present embodiment will be described. FIGS. 1 to 5 are diagrams to describe the processing of the data classifying device according to the present embodiment.

FIG. 1 will be described. For example, the data classifying device includes a storage unit 110 and N calculation resources S1 to SN. The storage unit 110 stores a record data table 110a. The record data table 110a stores M pieces of record data r1 to rM. The data classifying device distributes and arranges the record data r1 to rM to the calculation resources S1 to SN by using a conventional method. For example, the data classifying device randomly allocates each record data r1 to rM to the calculation resources S1 to SN so that the number of the recorded data stored in each of the calculation resources S1 to SN is nearly equal to each other.

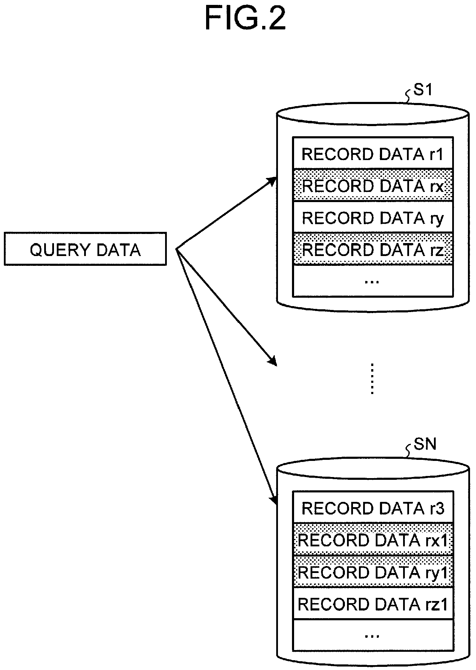

FIG. 2 will be described. When receiving query data, the data classifying device performs search/collation processing with the recorded data stored in each of the calculation resource S1 to SM by using the query data. The data classifying device measures a processing time of the processing relative to each recorded data by using the query data and registers the measured result to the intermediate table.

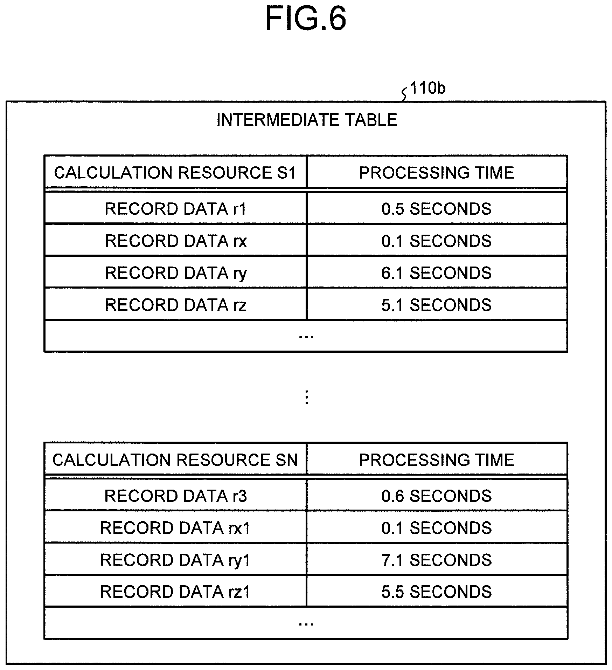

FIG. 6 is a diagram of an exemplary data structure of the intermediate table. An intermediate table 110b corresponds each record data stored in the calculation resource to the processing time relative to the query data for each calculation resource. For example, it is indicated that the processing time is "0.5 seconds" in a case where search and collation processing is performed to the record data r1 with certain query data in the calculation resource S1. It is indicated that the processing time is "0.1 seconds" in a case where the search and collation processing is performed to the record data rx with certain query data. It is indicated that the processing time is "6.1 seconds" in a case where the search and collation processing is performed to the record data ry with certain query data. It is indicated that the processing time is "5.1 seconds" in a case where the search and collation processing is performed to the record data rz with certain query data. Other description on the intermediate table 110b is omitted. Generally, when the query data is similar to the record data, the processing time gets longer. Therefore, the processing time indicated in the intermediate table 110b is an index indicating the similarity of the query data to the record data.

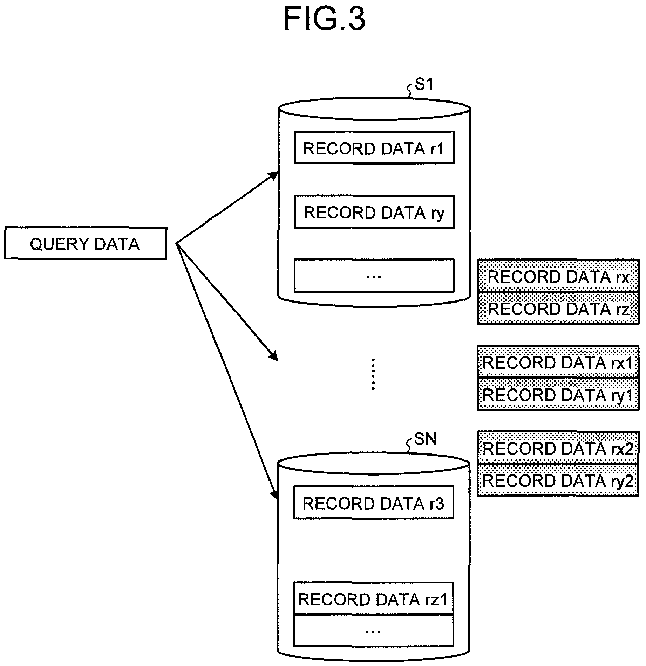

FIG. 3 will be described. The data classifying device extracts the record data with a long processing time from among the recorded data from each of the calculation resources S1 to SN based on the intermediate table 110b. For example, the data classifying device extracts an even number of pieces of the record data from each of the calculation resources S1 to SN. In the example illustrated in FIG. 3, the data classifying device extracts a pair of record data rx and rz, a pair of record data rx1 and ry1, and a pair of record data rx2 and ry2 from each of the calculation resources S1 to SN.

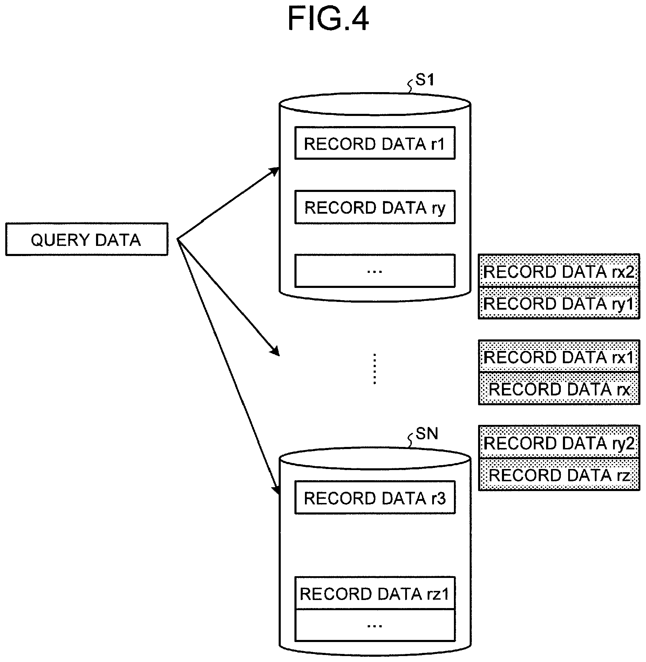

FIG. 4 will be described. The data classifying device rearranges the pair of recorded data extracted in FIG. 3 to a new pair. For example, the data classifying device forms a pair of recorded data which are not similar to each other. In the example illustrated in FIG. 4, the data classifying device rearranges the pairs to a pair of record data rx2 and ry1, a pair of record data rx1 and rx, and a pair of record data ry2 and rz.

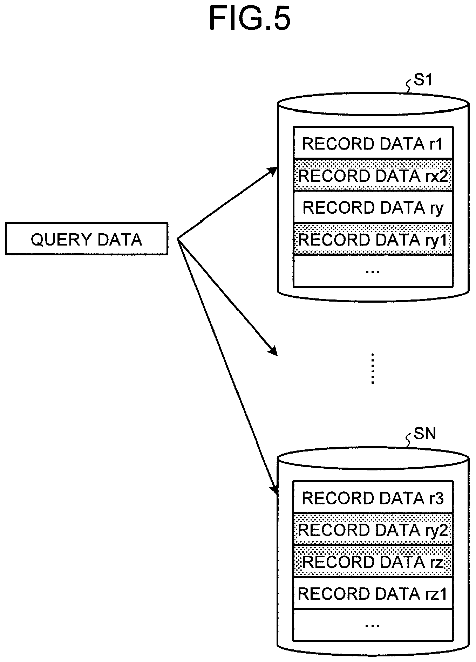

FIG. 5 will be described. The data classifying device performs processing to return the pair of recorded data which is rearranged by pairing to the calculation resources S1 to SN. For example, the data classifying device returns the pair of recorded data rx2 and ry1 to the calculation resource S1. The data classifying device returns the pair of recorded data ry2 and rz to the calculation resource SN. Also, the data classifying device returns the pair of recorded data rx1 and rx to the calculation resource which is not illustrated.

By performing the processing illustrated in FIGS. 1 to 5 by the data classifying device, the record data with a long processing time can be distributed to each of the calculation resources S1 to SN, and the time to perform the query data can be reduced. When the data classifying device rearranges the pairs, the pairing is performed based on the stable roommate problem. The stable roommate problem will be described in detail below.

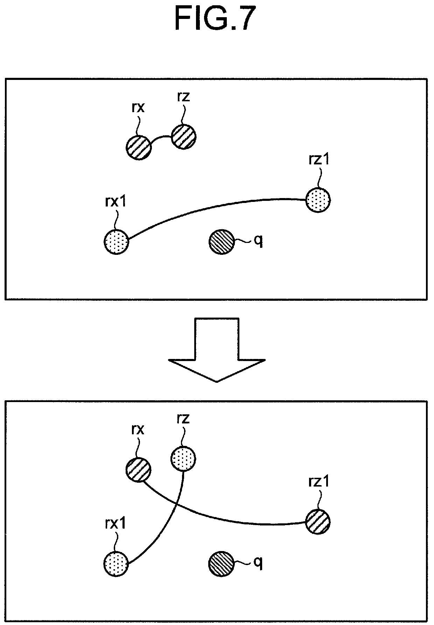

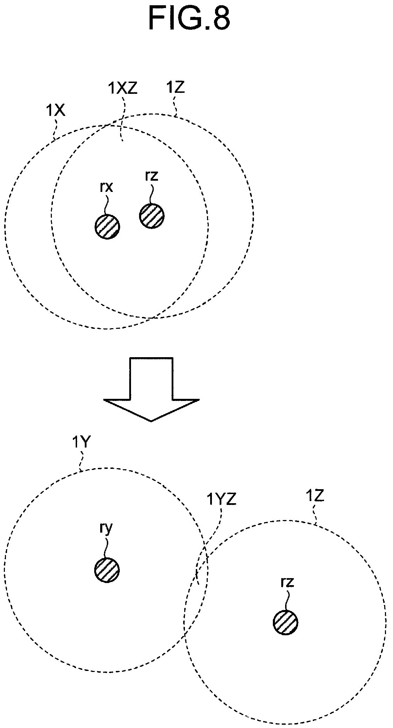

Here, the meaning of rearranging the pair of recorded data to a new pair will be described. FIGS. 7 and 8 are diagrams to describe the meaning of rearranging the new pair. In FIG. 7, for example, it is assumed that the record data rx and rz and the record data rx1 and rzl be the pairs of the record data before the rearrangement. It is assumed that the record data rx and rz1 and the record data rz and rx1 be the pairs of the recorded data after the rearrangement. The query data q performs the search and collation processing with each record data. In FIG. 7, it is assumed that the record data having the same pattern be stored in the same calculation resource.

FIG. 8 will be described next. When the pair of recorded data takes apart from each other, the common part of the two balls which have the same diameter is reduced. When the query data is included in the common part, this means that the two pieces of data has long processing time at the same time. For example, in FIG. 8, when it is assumed that a ball of the record data rx be a ball 1X and a ball of the record data rz be a ball 1Z, the common part is a common part 1XZ. When the query data is included in the common part 1XZ, the processing time of the record data rx and rz gets longer.

It is difficult to manipulate the distribution of the query data. Therefore, when the volume of the common part 1XZ is reduced, the probability that the two pieces of record data rx and rz have long processing time at the same time can be reduced. For example, in FIG. 8, an example is illustrated in which the volume of the common set is reduced by rearranging the pair of record data rx and rz to the pair of record data ry and rz. Here, it is assumed that a ball of the record data ry be a ball 1Y and a common part between the balls 1Y and 1Z be a common part 1YZ. Compared with the common part 1XZ, the common part 1YZ has a smaller volume. Therefore, a probability such that a query is included in the common part 1YZ is reduced. As described in FIG. 8, to rearrange the pair to a pair of the record data which are not similar to each other is the same as to reduce the volume of the common part.

Even when the record data is originally apart from another record data, similarly to the other record data group, a better pair can be formed by rearranging the pair to the pair of record data which have longer distance from each other. When forming a pair, the data classifying device may fix the calculation resource to which one of the recorded data belongs and return the pair to the fixed calculation resource at the time of selecting each record data to be a candidate. However, the data classifying device according to the present embodiment does not fix the calculation resource.

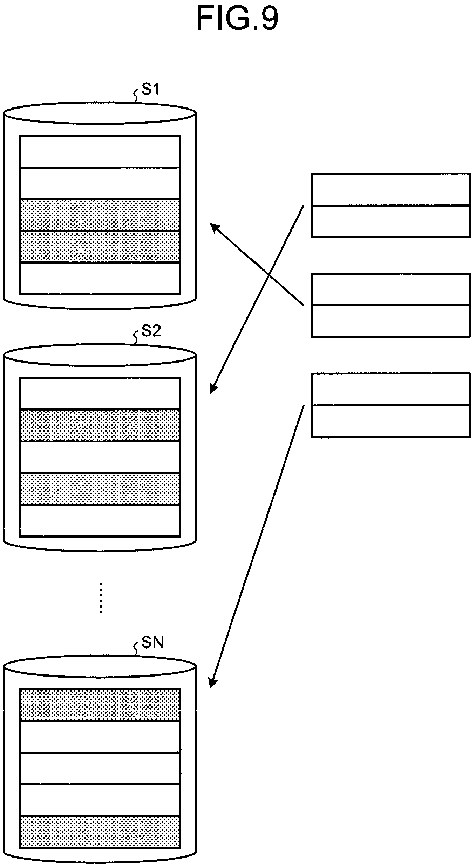

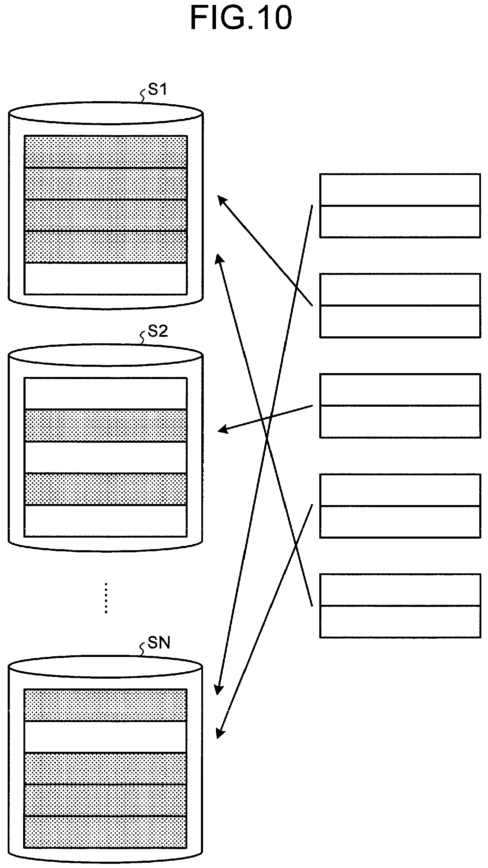

Subsequently, exemplary processing in a case where the data classifying device returns the pair of record data to the calculation resource will be described. FIGS. 9 and 10 are diagrams to describe the processing in a case where the pair is returned to the calculation resource. The pairing is performed to the record data to be the pair so that the record data are not similar to each other. However, the record data of which the processing time does not exceed a threshold is still stored in the calculation resources S1 to SN. Therefore, when the pair which has been returned to the calculation resource is similar to the remaining recorded data stored in the calculation resource, the processing time may get longer in a case where the query data is processed. Accordingly, the data classifying device arranges the pair in the calculation resource in which the record data having the low similarity to the pair is stored.

For example, the data classifying device returns the pair to the calculation resource based on the "stable matching problem". As illustrated in FIG. 9, when two pieces of record data are extracted from each of the calculation resources S1 to SN as an object of the pairing, each of the calculation resources S1 to SN has two holes. Therefore, the data classifying device can arrange a single pair to each calculation resource. The data classifying device determines the arrangement destination of each pair based on the stable matching problem.

Whereas, as illustrated in FIG. 10, when an even number of pieces of the record data are extracted from each of the calculation resources S1 to SN as an object of the pairing, each calculation resource has an even number of holes. The data classifying device assumes that there is a quota to accept the pair and determines the arrangement destination of each pair based on the "hospitals/residents problem". For example, when four pieces of record data are extracted from the calculation resource S1, the data classifying device assumes the calculation resource S1 as calculation resources S1-1 and S1-2 and performs the stable matching.

Next, an exemplary stable matching problem (stable marriage problem and stable matching problem) used by the data classifying device according to the present embodiment will be described. The stable matching problem is a problem to form stable pairs of men and women when there is N men and N women and each man has preference lists of the women and each woman has preference lists of the men. Here, when a matching of man and woman is given and both of them have a more preferred partner rather than the current partner who makes the pair together, they run off together. Such a pair is referred to as a blocking pair. A matching having the blocking pair is referred to as an unstable matching, and a matching having no blocking pair is referred to as a stable matching.

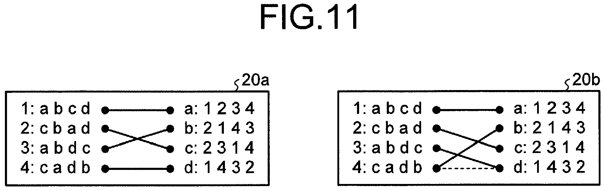

FIG. 11 is a diagram to describe the stable matching and the unstable matching. In FIG. 11, the stable matching and the unstable matching in a case where there are four men and four women are illustrated. The four men are respectively referred to as 1, 2, 3, and 4, and the four women are respectively referred to as a, b, c, and d. Each of the men 1, 2, 3, and 4 has a preference list relative to the women a, b, c, and d. For example, the preference of the man 2 is in an order of c, b, a, and d. For example, the preference of the woman b is in an order of 2, 1, 4, and 3.

In a group 20a, pairs are formed as (1, a), (2, c), (3, b), and (4, d). Since no blocking pair exists in the group 20a, it can be said that each pair in the group 20a is the stable matching.

On the other hand, in a group 20b, pairs are formed as (1, a), (2, c), (3, d), and (4, b). A blocking pair (4, d) exists in the group 20b. This is because the man 4 prefers the woman d rather than the woman b and the woman d prefers the man 4 rather than the man 3. Therefore, it can be said that each pair in the group 20b is the unstable matching.

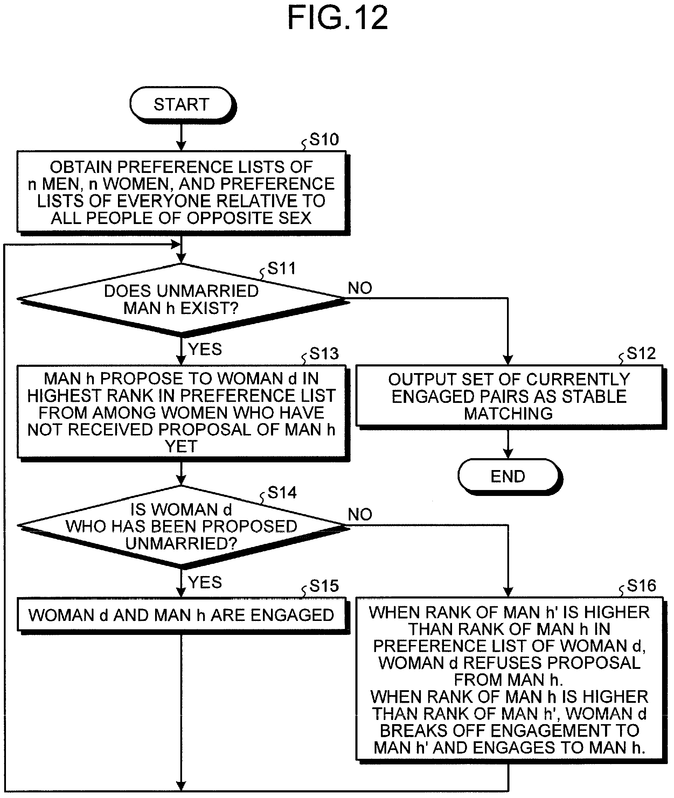

Next, the Gale-Shapley algorithm to obtain the stable matching indicated in the group 20a in FIG. 11 will be described. FIG. 12 is a diagram of an exemplary processing procedure of the Gale-Shapley algorithm. The stable matching can be obtained by performing the processing in FIG. 12. In the following description, the Gale-Shapley algorithm is written as "GS" accordingly.

As illustrated in FIG. 12, the GS obtains the preference lists of n men, n women, and the preference lists of everyone relative to all the people of the opposite sex (step S10). The GS determines whether a unmarried man h exists (step S11). When the unmarried man h does not exist (step S11, No), a set of currently engaged pairs is output as the stable matching (step S12).

On the other hand, when the unmarried man h exists (step S11, Yes), the GS makes the man h propose to the woman d in the highest rank in the preference list from among the women who have not received the proposal of the man h yet (step S13). The GS determines whether the woman d who has been proposed is unmarried (step S14).

When the woman d is unmarried (step S14, Yes), the GS makes the woman d engage to the man h (step S15), and the procedure proceeds to step S11. On the other hand, when the woman d is not unmarried (step S14, No), the GS allows the procedure to proceed to step S16.

In step S16, when a rank of a man h' is higher than a rank of the man h in the preference list of the woman d, the woman d refuses the proposal from the man h. When the rank of the man h is higher than the rank of the man h', the woman breaks off the engagement to the man h' and engages to the man h. After the processing in step S16 has been terminated, the GS shifts the processing to step S11.

Next, the extended Gale-Shapley in which the Gale-Shapley algorithm is extended will be described. In the following description, the extended Gale-Shapley is written as "extended GS". The extended GS deletes a pair candidate which does not become the stable matching from the preference list in the middle of the algorithm. Specifically, when the man h engages to the woman d, the extended GS is different from the GS in a point that a man with a lower priority than the man h is deleted from the preference list of the woman d. By adding this processing, the extended GS can more efficiently perform the stable matching than the GS.

Next, the hospitals/residents problem will be described. The hospitals/residents problem is a problem to determine an arrangement destination hospital of a doctor-in-training. A point different from the stable matching problem is that a hospital has the maximum number of people who can be accepted and does not accept the doctor-in-trainings more than that. The number of people who can be accepted in the hospital is written as a "quota". When the quotas of all the hospitals are one, the hospitals/residents problem is the same as the stable matching problem.

To solve the hospitals/residents problem, the hospital doctor-in-training problem is changed into a stable matching problem of an incomplete list as follows. When it is assumed that a quota of a hospital A be "qA", A is divided into qA and divided into A1, A2, A3, ..., and AqA of which the quota is one. Also, the hospital A included in the preference list of the doctor-in-training is changed from A1s of which the number is qA into AqA, and the ranking is performed in a high-handed manner.

For example, it is assumed that the hospitals A and B exist, the quota of the hospital A is two, and the quota of the hospital B is one. It is assumed that the first preference is the hospital B and the second preference is the hospital A in the preference list of one doctor-in-training. In this case, first, the hospital A is divided into hospitals A1 and A2, and ranking regarding the hospitals A1 and A2 is performed in a high-handed manner. For example, the second preference or the third preference is randomly allocated to the hospitals A1 and A2. In this way, for example, regarding the preference list of one doctor-in-training, it is assumed that the first preference be the hospital B, the second preference be the hospital A1, and the third preference be the hospital A2. As a result, since the problem is the stable matching problem of the incomplete list, the problem is solved by using the extended GS.

Next, the stable roommate problem will be described. The stable roommate problem is to divide 2n people into pairs of two. At that time, each person has a preference order to be a roommate relative to 2n - 1 people. When the present embodiment is applied, each record data has the preference list. In the preference list, the other record data with smaller similarity has a higher rank in the preference order to be a pair. The output is the stable pairing.

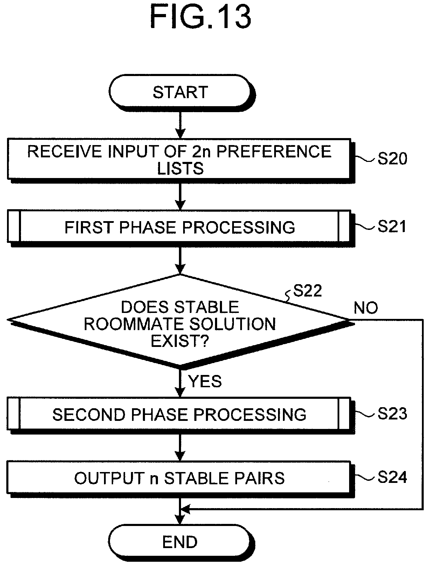

FIG. 13 is a flowchart of a processing procedure of an algorithm of the stable roommate problem. As an example in FIG. 13, the description will be made as assuming that the subject of the processing is the data classifying device. As illustrated in FIG. 13, the data classifying device receives an input of 2n preference lists (step S20). In step S20, the length of the preference list is 2n - 1.

The data classifying device performs first phase processing (step S21). The data classifying device determines whether a stable roommate solution exists (step S22). When the stable roommate solution does not exist (step S22, No), the data classifying device terminates the processing.

On the other hand, when the stable roommate solution exists (step S22, Yes), the data classifying device performs second phase processing (step S23). The data classifying device outputs n stable pairs (step S24).

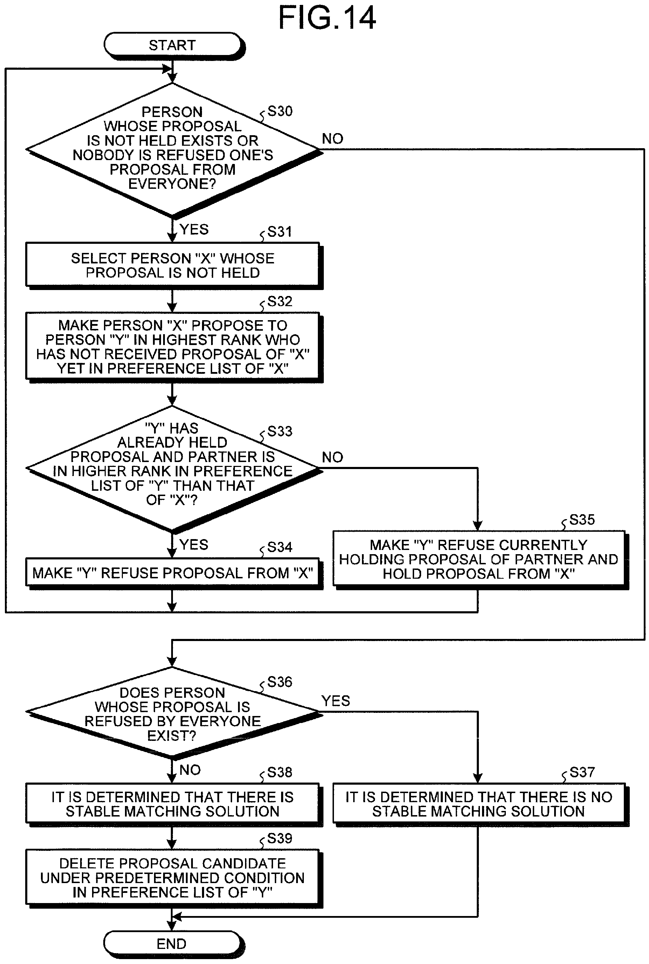

Next, an exemplary processing procedure of the first phase processing indicated in step S21 of FIG. 13 will be described. FIG. 14 is a flowchart of the processing procedure of the first phase processing. As illustrated in FIG. 14, the data classifying device determines whether a condition that a person whose proposal is not held exists or a condition that nobody is refused one's proposal from everyone is satisfied (step S30).

When the condition in step S30 is satisfied (step S30, Yes), the data classifying device selects a person "X" whose proposal is not held (step S31). The data classifying device makes the person "X" propose to a person "Y" in the highest rank who has not received the proposal of "X" yet in the preference list of the "X" (step S32).

The data classifying device determines whether the "Y" has already held the proposal and the partner is in the higher rank in the preference list of the "Y" than that of the "X" (step S33). When the "Y" has already held the proposal and the partner is at the higher rank in the preference list of the "Y" than that of the "X" (step S33, Yes), the data classifying device makes the "Y" refuse the proposal from the "X" (step S34) and shifts the procedure to step S30.

On the other hand, when the "Y" does not hold the proposal and when the partner of the proposal is in the lower rank in the preference list of the "Y" than that of the "X" (step S33, No), the data classifying device shifts the procedure to step S35. The data classifying device makes the "Y" refuse the currently holding proposal of the partner and hold the proposal from the "X" (step S35), and the procedure proceeds to step S30. In step S35, when the "Y" does not hold the proposal partner, the "Y" is made to hold the proposal from the "X".

The description returns to step S30. When the condition in step S30 is not satisfied (step S30, No), the data classifying device determines whether the person whose proposal is refused by everyone exists (step S36). When the person whose proposal is refused by everyone exists (step S36, Yes), the data classifying device determines that there is no stable matching solution (step S37), and the first phase processing is terminated.

On the other hand, when the person whose proposal is refused by everyone does not exist (step S36, No), the data classifying device determines that there is a stable matching solution (step S38). The data classifying device deletes a proposal candidate under a predetermined condition in the preference list of the "Y" (step S39), and the first phase processing is terminated.

Step S39 will be specifically described. As a precondition, it is assumed that the "Y" hold the proposal from the "X". The data classifying device deletes a proposal candidate having a lower rank than the "X" in the preference list of the "Y" from the preference list of the "Y". Also, the data classifying device deletes the partner, who has refused one's proposal, from the one's preference list. Also, the data classifying device deletes the proposal candidate from the preference list of the proposer corresponding to the deleted proposal candidate.

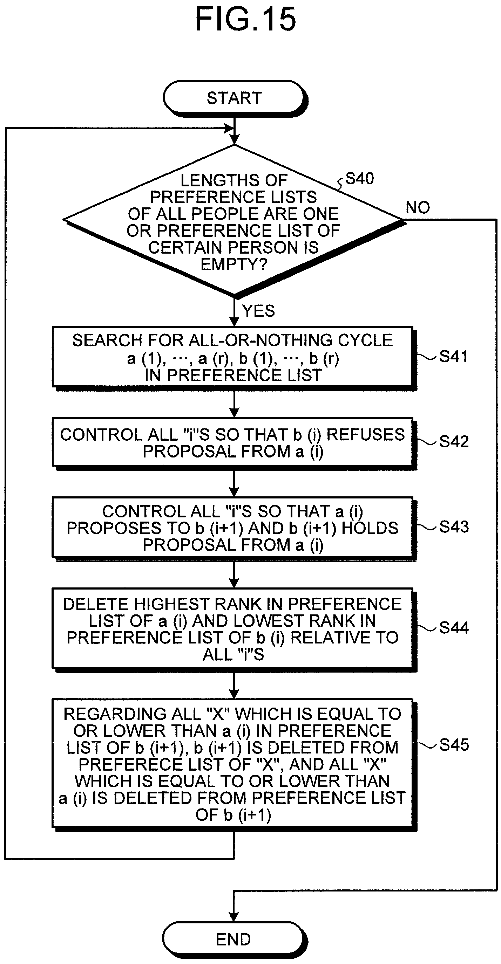

Next, an exemplary processing procedure of the second phase processing indicated in step S23 of FIG. 13 will be described. FIG. 15 is a flowchart of the processing procedure of the second phase processing. As illustrated in FIG. 15, the data classifying device determines whether a condition that the lengths of the preference lists of all the people are one or a condition that the preference list of a certain person is empty is satisfied (step S40).

When the condition in step S40 is not satisfied (step S40, No), the data classifying device terminates the second phase processing. On the other hand, when the condition in step S40 is satisfied (step S40, Yes), the data classifying device shifts the procedure to step S41. The data classifying device searches for an all-or-nothing cycle a (1), ..., a (r), b (1), ..., b (r) in the preference list (step S41). Here, since b (i) has the highest rank of a (i), b (i) holds a proposal from a (i). Also, to simplify the expression, this is expressed as a (r + 1) = a (1), b (r + 1) = b (1).

The data classifying device controls all the "i"s so that b (i) refuses the proposal from a (i) (step S42). The data classifying device controls all the "i"s so that a (i) proposes to b (i + 1) and b (i + 1) holds the proposal from a (i) (step S43). The data classifying device deletes the highest rank in the preference list of a (i) and the lowest rank in the preference list of b (i) relative to all the "i"s (step S44).

The data classifying device deletes b (i + 1) from the preference list of the "i" relative to all the "i" which is equal to or lower than a (i) in the preference list of b (i + 1). Also, the data classifying device deletes all the "X" which is equal to or lower than a (i) from the preference list of b (i + 1) (step S45), and the procedure proceeds to step S40.

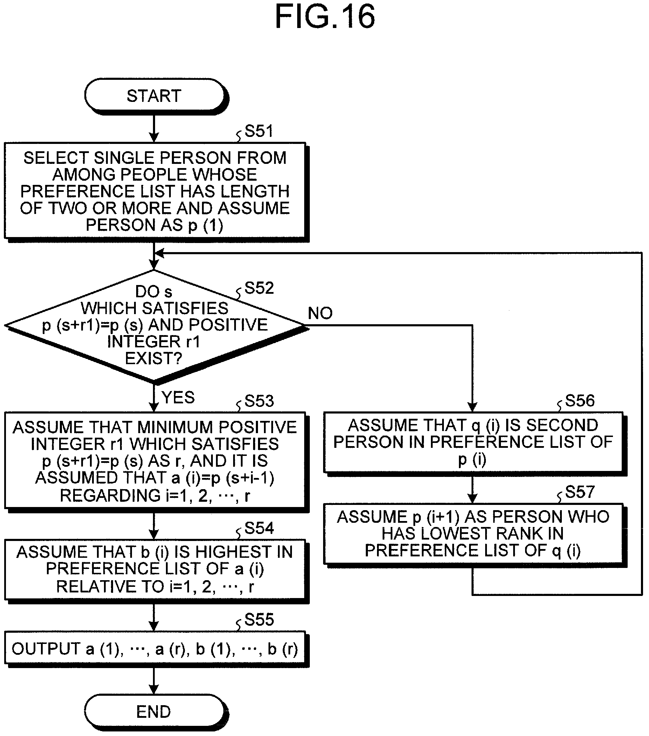

Here, an exemplary processing procedure for searching for the all-or-nothing cycle indicated in step S41 will be described. FIG. 16 is a flowchart of a processing procedure for searching for the all-or-nothing cycle. As illustrated in FIG. 16, the data classifying device selects a single person from among people whose deleted preference list has the length of two or more and assumes the person as p (1) (step S51). The data classifying device determines whether s which satisfies p (s + r) = p (s) and a positive integer r1 exist (step S52). The data classifying device assumes the minimum positive integer r1 which satisfies p (s + r1) = p (s) as r, and it is assumed that a (i) = p (s + i - 1) regarding i = 1, 2, ..., r (step S53). The data classifying device assumes that b (i) is the highest in the preference list of a (i) relative to i = 1, 2, ..., r (step S54). The data classifying device outputs a (1), ..., a (r), b (1), ..., b (r) (step S55).

On the other hand, when s which satisfies p (s + r) = p (s) and the positive integer r1 do not exist (step S52, No), the data classifying device shifts the procedure to step S56. The data classifying device assumes that q (i) is the second person in the preference list of p (i) (step S56) .

The data classifying device assumes p (i + 1) as the person who has the lowest rank in the preference list of q (i) (step S57), the procedure proceeds to step S52.

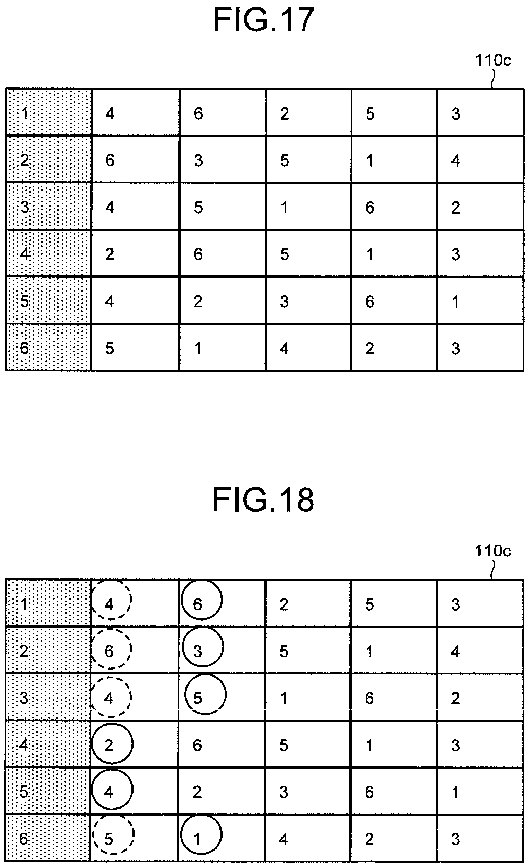

Next, exemplary processing for obtaining the stable room solution from each preference list by the data classifying device will be described. FIGS. 17 to 22 are diagrams to describe the processing for obtaining the stable room solution from each preference list by the data classifying device.

FIG. 17 will be described. Here, an exemplary preference list table 110c of each of the person 1 to person 6 is illustrated. In the preference list table 110c, the j-th row indicates the preference list of the j-th person. For example, the first row indicates the preference list of the person "1", and the order is from person 4, 6, 2, 5, and 3 from the highest priority.

FIG. 18 will be described next. When each of the person 1 to person 6 proposes according to the first phase processing, a relation between a proposer and a proposal destination which is in a holding state is as follows. Person 1 → person 6, person 2 → person 3, person 3 → person 5, person 4 → person 2, person 5 → person 4, and person 6 → person 1.

Whereas, a relation between the proposer to be denied and the proposal destination is as follows. Person 3 → person 4, person 1→ person 4, person 2 → person 6, and person 6 → person 5. For example, the person 3 proposes to the person 4. However, since the person 4 receives the proposal from the person 2 having the higher priority than the person 3, the person 4 denies the proposal from the person 3.

In FIG. 18, a person surrounded by a solid circle indicates the proposal destination to be the holding state. Also, a person surrounded by a dotted circle indicates the proposal destination that denies proposal. For example, the first row indicates that the person 1 proposes to the person 6 and the person 6 holds the proposal. Also, it is indicated that the person 1 proposes to the person 4 and the person 4 denies the proposal.

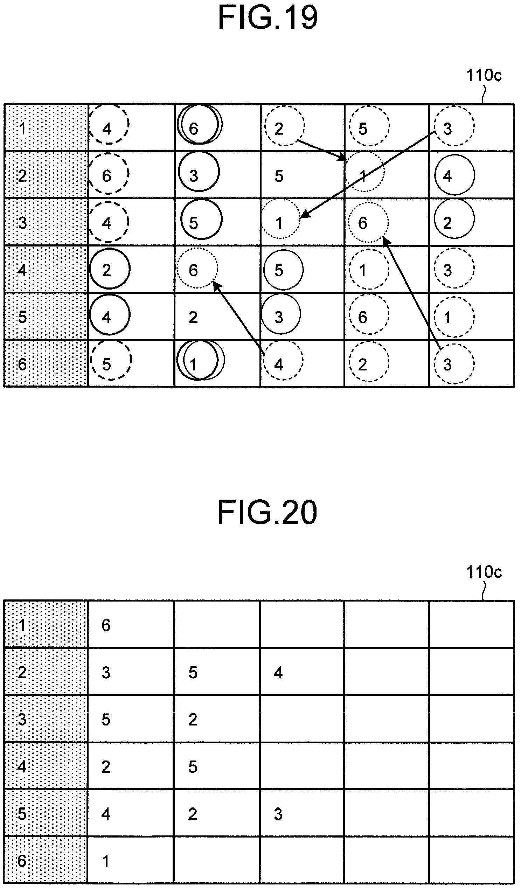

FIG. 19 will be described next. The data classifying device performs the processing indicated in step S39 in FIG. 14 and performs the processing for deleting unnecessary people from the preference list of each one. The first row corresponding to the preference list of the person 1 will be described. The proposal of the person 1 is held by the person 6, and also, the person 1 holds the proposal from the person 6. Therefore, in the preference list of the person 1, the people 2, 5, and 3 are hopeless proposers for the person 1. Also, the proposal of the person 1 to the person 4 is denied. Therefore, the data classifying device deletes the person 4, 2, 5, and 3 from the preference list of the person 1.

The second row corresponding to the preference list of the person 2 will be described. The person 3 holds the proposal from the person 2, and also, the person 2 holds the proposal from the person 4. Also, as indicated in the first row, the person 2 is a hopeless proposer for the person 1. Therefore, the person 1 in the second row is a hopeless proposer. Also, the proposal of the person 2 to the person 6 is denied. Therefore, the data classifying device deletes the people 6 and 1 from the preference list of the person 2.

The third row corresponding to the preference list of the person 3 will be described. The proposal of the person 3 is held by the person 5, and also, the person 3 holds the proposal from the person 2. Also, as indicated in the first row, the person 3 is a hopeless proposer for the person 1. Therefore, the person 1 in the third row is the hopeless proposer. Also, as indicated in the sixth row, the person 3 is a hopeless proposer for the person 6. The person 6 in the third row is a hopeless proposer. Therefore, the data classifying device deletes the people 4, 1, and 6 from the preference list of the person 3.

The fourth row corresponding to the preference list of the person 4 will be described. The proposal of the person 4 is held by the person 2, and also, the person 4 holds the proposal from the person 5. In the preference list of the person 4, the people 1 and 3 are hopeless proposers for the person 4. Also, as illustrated in the sixth row, the person 4 is the hopeless proposer for the person 6. Therefore, the person 6 in the fourth row is a hopeless proposer. Therefore, the data classifying device deletes the people 6, 1, and 3 from the preference list of the person 4.

The fifth row corresponding to the preference list of the person 5 will be described. The proposal of the person 5 is held by the person 4, and also, the person 5 holds the proposal from the person 3. In the preference list of the person 5, the people 6 and 1 are hopeless proposers for the person 5. Therefore, the data classifying device deletes the people 6 and 1 from the preference list of the person 5.

The sixth row corresponding to the preference list of the person 6 will be described. The proposal of the person 6 is held by the person 1, and also, the person 6 holds the proposal from the person 1. In the preference list of the person 6, the people 4, 2, and 3 are hopeless proposers for the person 6. Also, the proposal of the person 6 to the person 5 is denied. Therefore, the data classifying device deletes the people 4, 2, and 3 from the preference list of the person 6.

By performing the processing by the data classifying device, the preference list table 110c in FIG. 19 is changed into the preference list table 110c illustrated in FIG. 20. In FIG. 20, the relation between the proposer and the proposal destination to be the holding state is person 1 → person 6, person 2 → person 3, person 3 → person 5, person 4 → person 2, person 5 → person 4, and person 6 → person 1.

In the preference list table 110c in FIG. 20, the following property is satisfied. When q is in the highest rank in the preference list of p, q holds the proposal of p, and p is in the lowest rank of the preference list of q. Also, when q is in the preference list of p, p is in the preference list of q.

The data classifying device searches for the all-or-nothing cycle in the preference list table 110c in FIG. 20. For example, when it is assumed that p (1) is 2, a (1) = 3, b (1) = 5, a (2) = 4, and b (2) = 2 are satisfied.

For example, q (1) = 5 and p (2) = 3 are satisfied based on the processing procedure in FIG. 16. This is because it is assumed that q (i) be the second person in the preference list of p (i) and p (i+1) be the person with the lowest rank in the preference list of q (i). Then, similarly, q (2) = 2 and q (3) = 5 are satisfied, and p (3) = 4 and p (4) = 3 are satisfied. Here, since p (2) = p (4) = 3 is satisfied, a cycle such that p (2) → q (2) → p (3) → q (3) → p (4) (= p (2)) is detected. Also, when it is assumed that p (2) = a (1), p (3) = a (2), b (1) be in the highest rank in the preference list of a (1), and b (2) be in the lowest rank in the preference list of a (2), a (1), a (2), b (1), and b (2) are the following values.

The data classifying device controls all the "i"s so that b (i) refuses the proposal from a (i). Also, the data classifying device controls all the "i"s so that a (i) proposes to b (i + 1) and controls so that b (i + 1) holds the proposal from a (i). Also, the data classifying device deletes the highest rank in the list of a (i) and the lowest rank in the list of b (i) relative to all the "i"s. Then, the relation between the proposer and the proposal destination is person 1 → person 6, person 2 → person 3, "person 3 → person 2", "person 4 → person 5", person 5 → person 4, and person 6 → person 1.

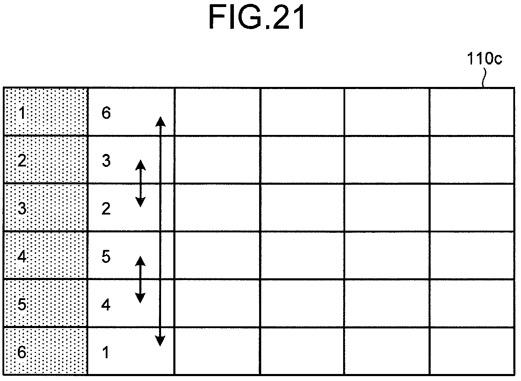

The data classifying device deletes b (i + 1) from the preference list of the "X" relative to all the "X" which is equal to or lower than a (i) in the preference list of b (i + 1). Also, the data classifying device deletes all the X which is equal to or lower than a (i) from the preference list of b (i + 1). By performing the processing by the data classifying device, the preference list table 110c illustrated in FIG. 20 is changed into the preference list table 110c illustrated in FIG. 21. That is, a pair of the person 1 and the person 6, a pair of the person 2 and the person 3, and a pair of the person 4 and the person 5 become the stable roommate solution.

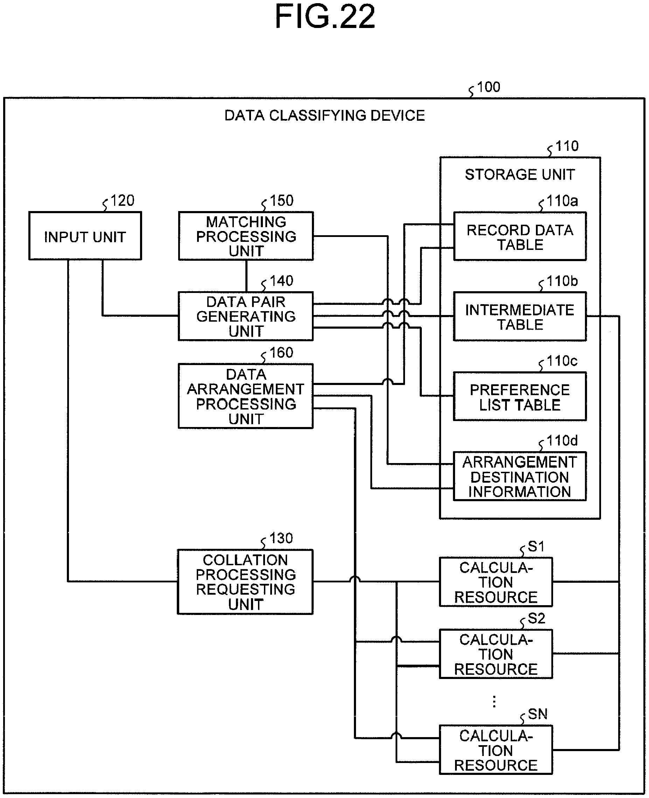

Next, an exemplary structure of the data classifying device according to the present embodiment will be described. FIG. 22 is a functional block diagram of the structure of the data classifying device according to the present embodiment. As illustrated in FIG. 22, a data classifying device 100 includes the calculation resources S1 to SN, the storage unit 110, an input unit 120, a collation processing requesting unit 130, a data pair generating unit 140, a matching processing unit 150, and a data arrangement processing unit 160. Among these, the data pair generating unit 140 corresponds to an extracting unit. The matching processing unit 150 and the data arrangement processing unit 160 correspond to a classifying unit.

The calculation resource S1 is a device which collates a plurality of pieces of record data arranged in the calculation resource S1 with query data obtained from the collation processing requesting unit 130 and performs processing for collating and searching for the record data corresponding to the query data. The calculation resource S1 outputs search results to an external device. Also, the calculation resource S1 measures a processing time needed for the collation and the search by the query data for each record data and registers the measured result to the intermediate table 110b. The calculation resource S1 has a generating unit which is not illustrated, and the generating unit may generate the intermediate table 110b. The description on the processing regarding the calculation resources S2 to SN is similar to that of the calculation resource S1. Generally, when the query data is similar to the record data, the processing time gets longer. Therefore, the processing time indicated in the intermediate table 110b is an index indicating the similarity of the query data to the record data.

The storage unit 110 includes a record data table 110a, an intermediate table 110b, a preference list table 110c, and arrangement destination information 110d. The storage unit 110 corresponds to a storage device, for example, a semiconductor memory element such as a random access memory (RAM), a read only memory (ROM), and a flash memory.

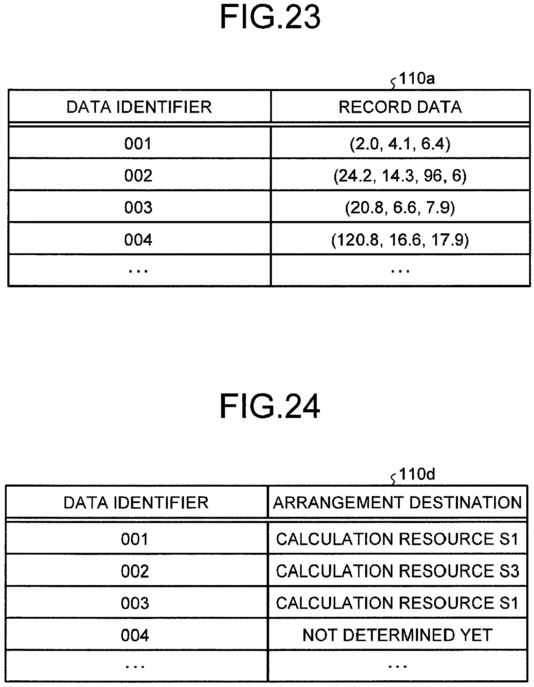

The record data table 110a has record data arranged to each of the calculation resources S1 to SN. FIG. 23 is a diagram of an exemplary data structure of the record data table. As illustrated in FIG. 23, the record data table 110a corresponds a data identifier to the record data. The data identifier is information which uniquely identifies the record data. The record data is arranged to each of the calculation resources S1 to SN. For example, record data corresponding to a data identifier "001" is "2.0, 4.1, 6.4". Here, an example has been indicated in which the data identifier is corresponded to the pair of record data. However, a single data identifier may be corresponded to a single piece of the record data.

The intermediate table 110b corresponds the query data to the processing time of the record data processed by the query data. For example, a data structure of the intermediate table 110b corresponds to that of the intermediate table 110b illustrated in FIG. 6.

The preference list table 110c holds information on the preference list of each record data. The preference list of each record data includes a plurality of pieces of preferred record data as an object to be a pair. In the preference list, the record data with smaller similarity gets a higher rank based on the similarity between the record data and the other record data.

For example, regarding the record data 001 to 004, the similarities between the record data 001 and the other record data 002 to 004 are respectively 10, 20, 30, and 40. In this case, the preference list of the record data 001 includes the record data 004, 003, and 002. The similarity corresponds to a distance between the record data, and the closer the distance between the pair of record data is, the higher the similarity is.

A data structure of the preference list table 110c corresponds to the preference list table illustrated in FIGS. 17 to 22. In the example illustrated in FIG. 17 to FIG. 22, for convenience of description, the preference lists of "the person 1 to the person 6" are illustrated. However, for example, "the person 1 to the person 6" respectively correspond to the record data "001 to 006". Also, it is assumed that the preference list of the record data other than the record data "001 to 006" be included in the preference list table 110c.

The arrangement destination information 110d is information indicating an arrangement destination of the data. FIG. 24 is a diagram of an exemplary data structure of the arrangement destination information. As illustrated in FIG. 24, the arrangement destination information 110d corresponds the data identifier to the arrangement destination. The data identifier corresponds to the data identifier described in FIG. 23 and the like. The arrangement destination is information which uniquely identifies the calculation resource in which the data is arranged. For example, in FIG. 24, the arrangement destination of the data corresponding to the data identifier "001" is the "calculation resource S1".

The description returns to FIG. 22. The input unit 120 is an input device to input various information to the collation processing requesting unit 130 and the data pair generating unit 140. For example, the input unit 120 corresponds to a keyboard, a mouse, and a touch panel. For example, a user requests the collation by operating the input unit 120 and inputting the query data to the collation processing requesting unit 130. Also, the user requests a threshold T0 and the arrangement of the data to the matching processing unit 150 by operating the input unit 120. The threshold T0 is a threshold which is compared with the processing time as described below.

When obtaining the query data from the input unit 120, the collation processing requesting unit 130 outputs the query data relative to each of the calculation resources S1 to SN and performs the collation processing request.

The data pair generating unit 140 obtains the stable roommate solution from the record data of which the processing time is equal to or more than the threshold T0 and generates a stable pair of the record data. For example, the processing of the data pair generating unit 140 corresponds to the processing illustrated in FIGS. 3 and 4. The data pair generating unit 140 outputs the generated information about the pair of record data to the matching processing unit 150. Exemplary processing of the data pair generating unit 140 will be specifically described below.

When obtaining the threshold T0 and the data arrangement request from the input unit 120, the data pair generating unit 140 refers to the intermediate table 110b and obtains the record data of which the processing time is equal to or more than the threshold T0 from the record data table 110a. The data pair generating unit 140 may obtain the record data of which the processing time is equal to or more than the threshold T0 from the calculation resources S1 to SN. In the following description on the data pair generating unit 140, the number of the calculation resources S1 to SN is assumed to be N. It is assumed that a data set obtained from the calculation resource i is $X\_i$. In each calculation resource i, the number of $X\_i$ is assumed to be $2*R\_i$. It is assumed that $K = R\_1 + R\_2 + ... + R\_N$ is satisfied. All the data sets obtained by the data pair generating unit 140 are assumed to be data sets X.

The data pair generating unit 140 performs the following processing relative to each element a of the data set X. The data pair generating unit 140 calculates the similarity relative to elements other than the element a of the data set X. The data pair generating unit 140 generates a preference list of the element a by arranging the elements other than the element a of the data set X in an order of the similarity from the smallest. By repeatedly performing the above processing for each element, the data pair generating unit 140 generates the preference list of each element and registers them to the preference list table 110c.

The data pair generating unit 140 obtains the stable roommate solution by using the Irving algorithm described in FIG. 13 based on the preference list table 110c. When the stable roommate solution is obtained, the data pair generating unit 140 generates K pairs of record data according to the solution and outputs them to the matching processing unit 150.

When the stable roommate solution does not exist, the data pair generating unit 140 generates the pair of record data based on the greedy algorithm. Here, the greedy algorithm will be described. The data pair generating unit 140 selects the i-th record data. When the selected record data does not form a pair, the data pair generating unit 140 performs the following processing. The data pair generating unit 140 forms a pair of the highest record data and the i-th record data from among the record data which do not form a pair in the preference list of the i-th record data. The data pair generating unit 140 performs the above processing relative to the i-th to K-th record data. It is assumed that the quota qi be R_i.

The matching processing unit 150 performs the matching between the pair of record data and the calculation resources S1 to SN and returns the pair of record data to the calculation resources S1 to SN based on the matching result. For example, the processing of the matching processing unit 150 corresponds to the above-mentioned processing of FIG. 5. In the following description, it is assumed that the calculation resources be S1, ..., and, SN and the number of the calculation resources be N. It is assumed that the pairs of the record data be p1, p2, ..., pK and the number of all the pairs of the record data be K. Also, it is assumed that the quotas be q_1, q_2, ..., q_N.

The matching processing unit 150 calculates the similarity of each record data arranged in the calculation resource Sj relative to (pi1, pi2) of each pair pi of the record data. The maximum value of the similarity of pi1 to each record data is m (1, i, j). The maximum value of the similarity of pi2 to each record data is m (2, i, j). In this case, the matching processing unit 150 assumes the similarity m (i, j) of the pair pi to the calculation resource Sj as the larger one of m (1, i, j) and m (2, i, j). A matrix D having K rows and N columns is defined, and each (i, j) component of the matrix D is assumed to be m (i, j).

The matching processing unit 150 sorts the i-th row of the matrix D in ascending order and determines an order of the calculation resource Sj relative to the pair pi. Then, the matching processing unit 150 assumes the determined order as a preference list Lpi of the pair pi. At this time, both j! = j' and dij = dij' could be satisfied, and either one may be first to come at the time of sorting. The matching processing unit 150 sorts the j-th row of the matrix D in ascending order and determines an order of the pair pi relative to a calculation resource Sj. Then, the matching processing unit 150 assumes the determined order as a preference list LSj of the calculation resource Sj.

The matching processing unit 150 solves the hospitals/residents problem with the extended GS algorithm by using Lp1, ..., and LpK and LS1, ..., and LSN. At this time, either one of the pair of record data and the calculation resource may propose. Also, it is assumed that the quota of the calculation resource be q_1, q_2, ..., and q_N. The matching processing unit 150 specifies the arrangement destination of the record data based on the matching result and generates the arrangement destination information 110d. For example, when the calculation resource matched with one pair is the calculation resource Sj, the arrangement destination of the record data of the pair is the calculation resource Sj.

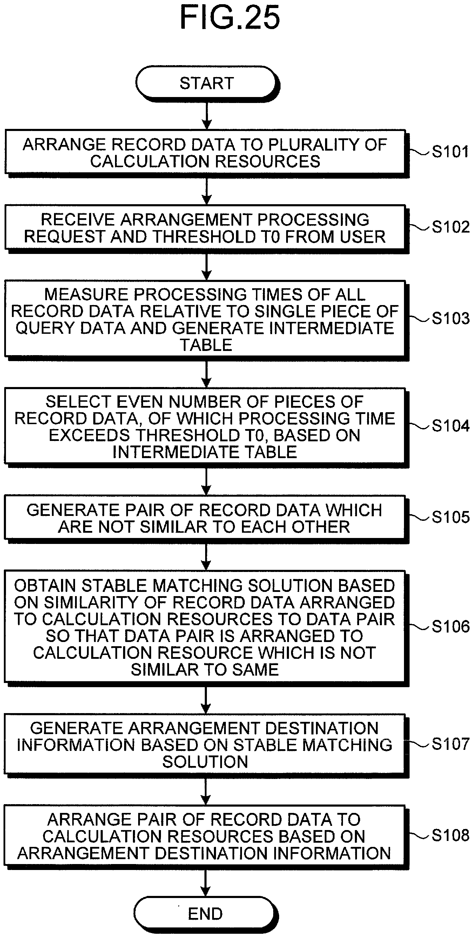

Next, a processing procedure of the data classifying device 100 according to the present embodiment will be described. FIG. 25 is a flowchart of a processing procedure of the data classifying device according to the present embodiment. As illustrated in FIG. 25, the data arrangement processing unit 160 of the data classifying device 100 arranges the record data to the plurality of calculation resources S1 to SN (step S101).

The input unit 120 of the data classifying device 100 receives an arrangement processing requesting and a threshold T0 from the user (step S102). The calculation resources S1 to SN measure the processing times of all the record data relative to a single piece of the query data and generate the intermediate table 110b (step S103).

The data pair generating unit 140 of the data classifying device 100 selects an even number of pieces of the record data, of which the processing time exceeds the threshold T0, based on the intermediate table 110b (step S104). The data pair generating unit 140 generates a pair of the record data which are not similar to each other (step S105).

The matching processing unit 150 of the data classifying device 100 obtains the stable matching solution based on the similarity of the record data arranged to the calculation resources S1 to SN to the data pair so that the data pair is arranged to the calculation resource which is not similar to the same (step S106). The data classifying device 100 generates the arrangement destination information 110d based on the stable matching solution (step S107). The data arrangement processing unit 160 arranges the pair of record data to the calculation resources S1 to SN based on the arrangement destination information 110d (step S108).

Next, an effect of the data classifying device 100 according to the present embodiment will be described. The data classifying device 100 extracts the even number of the record data having a long processing time relative to the query data from the calculation resources S1 to SN and forms a pair of the extracted record data which are not similar to each other. The data classifying device 100 arranges the pair of record data to the calculation resource where the record data which is not similar to the pair is stored. By performing this processing, a database that can reduce time to perform the query data can be constructed.

The data classifying device 100 generates a pair of the record data based on the intermediate table 110b indicating the processing time of the record data relative to the query data generated by the calculation resources S1 to SN. Therefore, the pair of record data which have a long processing time and are not similar to each other can be efficiently generated.

Next, other processing (1) of the data pair generating unit 140 illustrated in FIG. 22 will be described. The data pair generating unit 140 obtains the pair of record data which are not similar to each other by obtaining the stable roommate solution relative to the preference list. However, the obtaining method is not limited to this. The data pair generating unit 140 may obtain the pair of record data which are not similar to each other by obtaining the stable matching solution of the preference list.

When obtaining the threshold T0 and the data arrangement request from the input unit 120, the data pair generating unit 140 refers to the intermediate table 110b and obtains the record data of which the processing time is equal to or more than the threshold T0 from the record data table 110a. The data pair generating unit 140 may obtain the record data of which the processing time is equal to or more than the threshold T0 from the calculation resources S1 to SN.

It is assumed that a data set obtained from each calculation resource i be $X\_i$. In each calculation resource i, the number of $X\_i$ is assumed to be $2*R\_i$. It is assumed that $K = R\_1 + R\_2 + ... + R\_N$ is satisfied. All the data sets obtained by the data pair generating unit 140 are assumed to be data sets X.

The data pair generating unit 140 randomly selects K record data from the data set X. The set of the selected record data is assumed to be a data set Y, and other set is assumed to be a data set Z. The data pair generating unit 140 calculates the similarity of each element of the data set Z relative to each element a of the data set Y, and a list in which the elements of the data set Z are arranged in ascending order of the similarity is assumed to be a preference list of the element a. The data pair generating unit 140 calculates the similarity of each element of the data set Y relative to each element b of the data set Z, and a list in which the elements of the data set Y are arranged in ascending order of the similarity is assumed to be a preference list of the element b. For example, the data pair generating unit 140 calculates a distance between the elements of the data set Y and the elements of the data set Z as the similarity. The shorter the distance is, the larger the similarity is.

The data pair generating unit 140 obtains the stable matching solution with the Gale-Shapley algorithm based on the preference list of each element of the data set Y and the preference list of each element of the data set Z and forms the pair of record data according to the obtained stable matching solution. It is assumed that the quota qi be $R\_i$. The Gale-Shapley algorithm corresponds to the processing procedure in FIG. 12.

When the data pair generating unit 140 obtains the stable roommate solution or the stable matching solution, the quota may be set as follows.

It is assumed that a data set obtained from a certain calculation resource i be $X\_i$. In each calculation resource i, the number of $X\_i$ is assumed to be $2R\_i$. It is assumed that $K = R\_1 + R\_2 + ... + R\_N$ is satisfied. All the data sets obtained by the data pair generating unit 140 are assumed to be data sets X. Also, it is assumed that the number of the record data allocated to each of the calculation resources S1 to SN be n1, n2, ..., and nN.

The data pair generating unit 140 obtains a quota $q\_i$ based on the formula (1). M included in the formula (1) is defined by the formula (2). Also, floor (x) included in the formula (1) indicates the largest integer that does not exceed x.

$$q_i = \max\left( floor\left(\frac{M}{N}\right) - n_i + R_i, 0 \right) \qquad (1)$$

$$M := \sum_i n_i \qquad (2)$$

When a condition indicated in the formula (3) is satisfied, the data pair generating unit 140 randomly selects i* from among one to N and defines q_i* as indicated in the formula (4) again.

$$\sum_{i=1}^{N} q_i < M - \sum_{i=1}^{N} (n_i - R_i) \qquad (3)$$

$$q_i* = M - \sum_{i=1}^{N} (n_i - R_i) - \sum_{j=1, j=1}^{N} q_i \qquad (4)$$

A purpose of setting the quota $q\_i$ is that the numbers of record data arranged to the calculation resources S1 to SN become almost equal to each other when the data pairs are allocated to the calculation resources S1 to SN again. Since M is the number of all the record data, it is preferable to set $q\_i$ so that $n\_i - R\_i + q\_i$ is equal to M/N in order to equally allocate all the record data. However, it is preferable that the quota be not a negative integer. In addition, the selected record data is finally arranged to the calculation resources S1 to SN. Therefore, when the sum of the quotas does not satisfy a condition of the formula (3), the data pair generating unit 140 adjusts the quota according to the formula (4).

Other processing (2) of the data pair generating unit 140 illustrated in FIG. 22 will be described. The data pair generating unit 140 may form a pair of U pieces of record data not a pair of two pieces of record data, and U is a number equal to or more than three.

The data pair generating unit 140 randomly selects the elements of which the number is multiples of U from among the data set X_i obtained from each calculation resource i. The number of the selected elements is U*R_i. It is assumed that K = R_1 + R_2 + ... + R_N, and all the selected data sets are assumed to be X. The data pair generating unit 140 returns the data which has not selected to the calculation resource.

The data pair generating unit 140 performs the following processing relative to each element a of the data set X. The data pair generating unit 140 calculates the similarity relative to the elements other than the element a of the data set X. The data pair generating unit 140 assumes a list in which the similarities of the elements other than the element a of the data set X are arranged in ascending order as a preference list of the element a. The data pair generating unit 140 considers all the combinations relative to the preference lists of all the elements of the data set X and obtains the stable roommate solution. When the stable roommate solution is obtained, the data pair generating unit 140 generates K pairs of record data according to the solution and outputs them to the matching processing unit 150.

When the stable roommate solution does not exist, the data pair generating unit 140 generates the pair of record data based on the greedy algorithm. Here, the greedy algorithm will be described. The data pair generating unit 140 selects the i-th record data. When the selected record data does not form a pair, the data pair generating unit 140 performs the following processing. The data pair generating unit 140 forms a pair of the record data in the upper (U - 1) pieces of record data and the i-th record data from among the record data which do not form a pair yet in the preference list of the i-th record data. The data pair generating unit 140 performs the above processing relative to the first to the U*K-th record data. It is assumed that the quota qi be R_i.

Next, other processing of the matching processing unit 150 illustrated in FIG. 22 will be described. In the following description, it is assumed that the calculation resources be S1, ..., and, SN and the number of the calculation resources be N. It is assumed that the pair of record data be p1, p2, ..., pK and the number of the data of each pair be U. The matching processing unit 150 calculates the similarity of the record data arranged to the calculation resource Sj relative to each pair pi of record data (pi1, pi2, ..., and pi (U)). The maximum value of the similarity of the piu and the record data is m (u, i, j). The similarity m (i, j) of the pair of record data to the calculation resource is the maximum value of m (1, i, j), ..., m (U, i, j). A matrix D having K rows and N columns is defined, and each (i, j) component of the matrix D is assumed to be m (i, j).

The matching processing unit 150 sorts the i-th row of the matrix D in ascending order and determines an order of the calculation resource Sj relative to the pair pi. Then, the matching processing unit 150 assumes the determined order as a preference list Lpi of the pair pi. At this time, both j! = j' and dij = dij' could be satisfied, and either one may be first to come at the time of sorting. The matching processing unit 150 sorts the j-th row of the matrix D in ascending order and determines an order of the pair pi relative to a calculation resource Sj. Then, the matching processing unit 150 assumes the determined order as a preference list LSj of the calculation resource Sj.

The matching processing unit 150 solves the hospitals/residents problem with the extended GS algorithm by using Lp1, ..., and LpK and LS1, ..., and LSN. At this time, either one of the pair of record data and the calculation resource may propose. Also, it is assumed that the quota of the calculation resource be q_1, q_2, ..., and q_N. The matching processing unit 150 specifies the arrangement destination of the record data based on the matching result and generates the arrangement destination information 110d. For example, when the calculation resource matched with one pair is the calculation resource Sj, the arrangement destination of the record data of the pair is the calculation resource Sj.

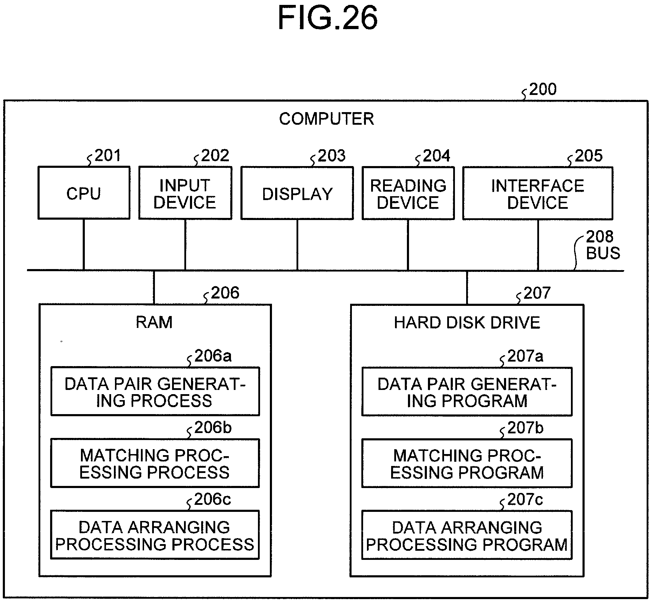

Next, an exemplary computer which executes a data classifying program for realizing a function similar to that of the data classifying device 100 indicated in the above embodiment will be described. FIG. 26 is a diagram of an exemplary computer for executing the data classifying program.

As illustrated in FIG. 26, a computer 200 includes a CPU 201 for performing various operation processing, an input device 202 for receiving an input of data from a user, and a display 203. Also, the computer 200 includes a reading device 204 for reading a program and the like from storage media and an interface device 205 for receiving/transmitting the data from/to other computer via a network. Also, the computer 200 includes a RAM 206 for temporarily storing various information and a hard disk drive 207. The devices 201 to 207 are connected to a bus 208.

The hard disk drive 207 includes a data pair generating program 207a, a matching processing program 207b, and a data arranging processing program 207c. The CPU 201 reads the data pair generating program 207a, the matching processing program 207b, and the data arranging processing program 207c and develops the programs to the RAM 206.

The data pair generating program 207a functions as a data pair generating process 206a. The matching processing program 207b functions as a matching processing process 206b. The data arranging processing program 207c functions as a data arranging processing process 206c. The processing of the data pair generating process 206a corresponds to that of the data pair generating unit 140. The processing of the matching processing process 206b corresponds to that of the matching processing unit 150. The processing of the data arranging processing process 206c corresponds to the processing of the data arrangement processing unit 160.

For example, the data pair generating program 207a, the matching processing program 207b, and the data arranging processing program 207c are stored in "portable physical media" such as a flexible disk (FD), a CD-ROM, a DVD disk, a magnetooptical disk, and an IC card that are inserted into the computer 200. The computer 200 may read and perform each of the programs 207a to 207c.

A database that can reduce time to perform query data can be constructed.

**Claims**

1.  A data classifying program that causes a computer to execute a process comprising:

    performing processing request to first data groups stored in a database;
    obtaining a parameter obtained from results of the performed processing for each data included in the first data group;
    extracting a second data group from at least the plurality of first data groups based on a first similarity between the parameters;
    generating a third data group by classifying data included in the second data group so that second similarities between the parameters of the data included in the second data group are low; and
    classifying the third data group to the first data group so that a third similarity between the parameters of the data included in a pair of the third data group and the first data group is low.

2.  The data classifying program according to claim 1, wherein
    the parameter is a processing time of each data included in the first data groups processed by the processing request.

3.  The data classifying program according to claim 2, wherein the process further comprises generating an intermediate table indicating a relation between the processing request and the processing time of each data included in the first data groups and generating the third data group by classifying the data included in the second data group based on the intermediate table.

4.  The data classifying program according to claim 1, wherein the third data group includes a data pair, and the classifying classifies the third data group to the first data groups so that the third similarity between a pair of one data pair of the third data group and the first data group is lower than the third similarity between a pair of a data pair of other third data group and the first data group.

5.  A data classifying method executed by a computer, the data classifying method comprising:

    performing processing request to first data groups stored in a database;
    obtaining a parameter obtained from results of the performed processing for each data included in the first data group;
    extracting a second data group from at least the plurality of first data groups based on a first similarity between the parameters;
    generating a third data group by classifying data included in the second data group so that second similarities between the parameters of the data included in the second data group are low; and
    classifying the third data group to the first data group so that a third similarity between the parameters of the data included in a pair of the third data group and the first data group is low.

6.  The data classifying method according to claim 5, wherein
    the parameter is a processing time of each data included in the first data groups processed by the processing request.

7.  The data classifying method according to claim 6, wherein the data classifying method further comprises generating an intermediate table indicating a relation between the processing request and the processing time of each data included in the first data groups and generating the third data group is to generate the third data group by classifying the data included in the second data group based on the intermediate table.

8.  The data classifying method according to claim 5, wherein the third data group includes a data pair, and the classifying classifies the third data group to the first data groups so that the third similarity between a pair of one data pair of the third data group and the first data group is lower than the third similarity between a pair of a data pair of other third data group and the first data group.

9. A data classifying device(100) comprising:

an extracting unit(140) that performs processing request to first data groups stored in a database, obtains a parameter obtained from results of the performed processing for each data included in the first data group, and extracts a second data group from at least the plurality of first data groups based on a first similarity between the parameters; and
a classifying unit(150,160) that generates a third data group by classifying data included in the second data group so that second similarities between the parameters of the data included in the second data group are low and classifies the third data group to the first data group so that a third similarity between the parameters of the data included in a pair of the third data group and the first data group is low.

10. The data classifying device according to claim 9, wherein the parameter is a processing time of each data included in the first data groups processed by the processing request.

11. The data classifying device according to claim 10, further comprising:

a generating unit(S1 to SN) that generates an intermediate table indicating a relation between the processing request and the processing time of each data included in the first data groups, wherein
the classifying unit(150,160) generates the third data group by classifying the data included in the second data group based on the intermediate table.

12. The data classifying device according to claim 9, wherein the third data group includes a data pair, and the classifying unit(150,160) classifies the third data group to the first data groups so that the third similarity between a pair of one data pair of the third data group and the first data group is lower than the third similarity between a pair of a data pair of other third data group and the first data group.

# FIG.1

# FIG.2

QUERY DATA

S1

RECORD DATA r1
RECORD DATA rx
RECORD DATA ry
RECORD DATA rz
...

SN

RECORD DATA r3
RECORD DATA rx1
RECORD DATA ry1
RECORD DATA rz1
...

# FIG.3

# FIG.4

QUERY DATA

S1

RECORD DATA r1

RECORD DATA ry

...

RECORD DATA rx2
RECORD DATA ry1

RECORD DATA rx1
RECORD DATA rx

RECORD DATA ry2
RECORD DATA rz

SN

RECORD DATA r3

RECORD DATA rz1

...

# FIG.5

QUERY DATA

S1

| RECORD DATA r1 |
| RECORD DATA rx2 |
| RECORD DATA ry |
| RECORD DATA ry1 |
| ... |

SN

| RECORD DATA r3 |
| RECORD DATA ry2 |
| RECORD DATA rz |
| RECORD DATA rz1 |
| ... |

# FIG.6

110b

### INTERMEDIATE TABLE

| CALCULATION RESOURCE S1 | PROCESSING TIME |
|---|---|
| RECORD DATA r1 | 0.5 SECONDS |
| RECORD DATA rx | 0.1 SECONDS |
| RECORD DATA ry | 6.1 SECONDS |
| RECORD DATA rz | 5.1 SECONDS |
| ... | |

⋮

| CALCULATION RESOURCE SN | PROCESSING TIME |
|---|---|
| RECORD DATA r3 | 0.6 SECONDS |
| RECORD DATA rx1 | 0.1 SECONDS |
| RECORD DATA ry1 | 7.1 SECONDS |
| RECORD DATA rz1 | 5.5 SECONDS |
| ... | |

# FIG.7

# FIG.8

# FIG.9

# FIG.10

# FIG.11

20a

| 1: a b c d | ● | ● | a: 1 2 3 4 |
| 2: c b a d | ● | ● | b: 2 1 4 3 |
| 3: a b d c | ● | ● | c: 2 3 1 4 |
| 4: c a d b | ● | ● | d: 1 4 3 2 |

20b

| 1: a b c d | ● | ● | a: 1 2 3 4 |
| 2: c b a d | ● | ● | b: 2 1 4 3 |
| 3: a b d c | ● | ● | c: 2 3 1 4 |
| 4: c a d b | ● | ● | d: 1 4 3 2 |

# FIG.12

START

S10
OBTAIN PREFERENCE LISTS OF
n MEN, n WOMEN, AND PREFERENCE
LISTS OF EVERYONE RELATIVE TO
ALL PEOPLE OF OPPOSITE SEX

S11
DOES UNMARRIED
MAN h EXIST? —— NO

YES

S13
MAN h PROPOSE TO WOMAN d IN
HIGHEST RANK IN PREFERENCE LIST
FROM AMONG WOMEN WHO HAVE
NOT RECEIVED PROPOSAL OF MAN h
YET

S12
OUTPUT SET OF CURRENTLY
ENGAGED PAIRS AS STABLE
MATCHING

END

S14
IS WOMAN d
WHO HAS BEEN PROPOSED —— NO
UNMARRIED?

YES

S15
WOMAN d AND MAN h ARE ENGAGED

S16
WHEN RANK OF MAN h' IS HIGHER
THAN RANK OF MAN h IN
PREFERENCE LIST OF WOMAN d,
WOMAN d REFUSES PROPOSAL
FROM MAN h.
WHEN RANK OF MAN h IS HIGHER
THAN RANK OF MAN h', WOMAN d
BREAKS OFF ENGAGEMENT TO
MAN h' AND ENGAGES TO MAN h.

# FIG.13

```
        ┌──────────────┐
        │    START     │
        └──────┬───────┘
               │
               ▼
  ┌──────────────────────────┐
  │ RECEIVE INPUT OF 2n       │  ～S20
  │ PREFERENCE LISTS          │
  └──────────┬───────────────┘
             │
             ▼
  ┌──────────────────────────┐
  │  FIRST PHASE PROCESSING   │  ～S21
  └──────────┬───────────────┘
             │
             ▼
          ╱────────╲               S22
        ╱  DOES STABLE  ╲
      ╱ ROOMMATE SOLUTION ╲  NO
      ╲      EXIST?      ╱ ──────┐
        ╲            ╱           │
          ╲────────╱             │
             │ YES               │
             ▼                   │
  ┌──────────────────────────┐   │
  │ SECOND PHASE PROCESSING  │  ～S23
  └──────────┬───────────────┘   │
             │                   │
             ▼                   │
  ┌──────────────────────────┐   │
  │  OUTPUT n STABLE PAIRS   │  ～S24
  └──────────┬───────────────┘   │
             │◄──────────────────┘
             ▼
        ┌──────────────┐
        │     END      │
        └──────────────┘
```

# FIG.14

START

S30
PERSON WHOSE PROPOSAL IS NOT HELD EXISTS OR NOBODY IS REFUSED ONE'S PROPOSAL FROM EVERYONE? — NO

YES

S31
SELECT PERSON "X" WHOSE PROPOSAL IS NOT HELD

S32
MAKE PERSON "X" PROPOSE TO PERSON "Y" IN HIGHEST RANK WHO HAS NOT RECEIVED PROPOSAL OF "X" YET IN PREFERENCE LIST OF "X"

S33
"Y" HAS ALREADY HELD PROPOSAL AND PARTNER IS IN HIGHER RANK IN PREFERENCE LIST OF "Y" THAN THAT OF "X"? — NO

YES

S34
MAKE "Y" REFUSE PROPOSAL FROM "X"

S35
MAKE "Y" REFUSE CURRENTLY HOLDING PROPOSAL OF PARTNER AND HOLD PROPOSAL FROM "X"

S36
DOES PERSON WHOSE PROPOSAL IS REFUSED BY EVERYONE EXIST? — YES

NO

S38
IT IS DETERMINED THAT THERE IS STABLE MATCHING SOLUTION

S37
IT IS DETERMINED THAT THERE IS NO STABLE MATCHING SOLUTION

S39
DELETE PROPOSAL CANDIDATE UNDER PREDETERMINED CONDITION IN PREFERENCE LIST OF "Y"

END

# FIG.15

```
        ┌──────────────┐
        │    START     │
        └──────┬───────┘
               │
    ┌──────────┤
    │          ▼
    │     ╱──────────╲
    │   ╱  LENGTHS OF  ╲    S40
    │  ╱ PREFERENCE LISTS╲
    │ ╱ OF ALL PEOPLE ARE ONE╲  NO
    │ ╲ OR PREFERENCE LIST OF ╱────────┐
    │  ╲ CERTAIN PERSON IS  ╱          │
    │   ╲    EMPTY?       ╱            │
    │     ╲──────────╱                 │
    │          │ YES                   │
    │          ▼                       │
```

**S40** — LENGTHS OF PREFERENCE LISTS OF ALL PEOPLE ARE ONE OR PREFERENCE LIST OF CERTAIN PERSON IS EMPTY? — NO

YES

**S41** — SEARCH FOR ALL-OR-NOTHING CYCLE a (1), ⋯, a (r), b (1), ⋯, b (r) IN PREFERENCE LIST

**S42** — CONTROL ALL "i"S SO THAT b (i) REFUSES PROPOSAL FROM a (i)

**S43** — CONTROL ALL "i"S SO THAT a (i) PROPOSES TO b (i+1) AND b (i+1) HOLDS PROPOSAL FROM a (i)

**S44** — DELETE HIGHEST RANK IN PREFERENCE LIST OF a (i) AND LOWEST RANK IN PREFERENCE LIST OF b (i) RELATIVE TO ALL "i"S

**S45** — REGARDING ALL "X" WHICH IS EQUAL TO OR LOWER THAN a (i) IN PREFERENCE LIST OF b (i+1), b (i+1) IS DELETED FROM PREFERECE LIST OF "X", AND ALL "X" WHICH IS EQUAL TO OR LOWER THAN a (i) IS DELETED FROM PREFERENCE LIST OF b (i+1)

```
        ┌──────────────┐
        │     END      │
        └──────────────┘
```

# FIG.16

```
                    ┌──────────────┐
                    │    START     │
                    └──────┬───────┘
                           │           ⌐S51
    ┌──────────────────────▼──────────────────────┐
    │       SELECT SINGLE PERSON FROM             │
    │        AMONG PEOPLE WHOSE                    │
    │    PREFERENCE LIST HAS LENGTH               │
    │    OF TWO OR MORE AND ASSUME                 │
    │          PERSON AS p (1)                    │
    └──────────────────────┬──────────────────────┘
                           │
                           ▼           ⌐S52
              ◇ DO s                ◇
            ◇   WHICH SATISFIES       ◇      NO
          ◇ p (s+r1)=p (s) AND POSITIVE ◇──────────┐
            ◇     INTEGER r1         ◇             │
              ◇    EXIST?         ◇                │
                     │ YES                         │
                     │    ⌐S53                     ▼    ⌐S56
    ┌────────────────▼─────────────┐   ┌───────────────────────────┐
    │ ASSUME THAT MINIMUM POSITIVE │   │ ASSUME THAT q (i) IS SECOND│
    │  INTEGER r1 WHICH SATISFIES  │   │ PERSON IN PREFERENCE LIST OF│
    │   p (s+r1)=p (s) AS r, AND IT IS│ │         p (i)             │
    │ ASSUMED THAT a (i)=p (s+i-1) │   └────────────┬──────────────┘
    │    REGARDING i=1, 2, ···, r  │                │    ⌐S57
    └────────────────┬─────────────┘   ┌────────────▼──────────────┐
                     │    ⌐S54         │ ASSUME p (i+1) AS PERSON WHO│
    ┌────────────────▼─────────────┐   │   HAS LOWEST RANK IN       │
    │ ASSUME THAT b (i) IS HIGHEST IN│  │ PREFERENCE LIST OF q (i)   │
    │  PREFERENCE LIST OF a (i)    │   └────────────┬──────────────┘
    │   RELATIVE TO i=1, 2, ···, r │                │
    └────────────────┬─────────────┘                │
                     │    ⌐S55                       │
    ┌────────────────▼─────────────┐                │
    │ OUTPUT a (1), ···, a (r), b (1), ···, b (r) │  │
    └────────────────┬─────────────┘                │
                     │                              │
                     ▼                              │
             ┌──────────────┐                       │
             │     END      │                       │
             └──────────────┘                       │
```

# FIG.17

110c

| 1 | 4 | 6 | 2 | 5 | 3 |
|---|---|---|---|---|---|
| 2 | 6 | 3 | 5 | 1 | 4 |
| 3 | 4 | 5 | 1 | 6 | 2 |
| 4 | 2 | 6 | 5 | 1 | 3 |
| 5 | 4 | 2 | 3 | 6 | 1 |
| 6 | 5 | 1 | 4 | 2 | 3 |

# FIG.18

110c

| 1 | (4) | (6) | 2 | 5 | 3 |
|---|---|---|---|---|---|
| 2 | (6) | (3) | 5 | 1 | 4 |
| 3 | (4) | (5) | 1 | 6 | 2 |
| 4 | (2) | 6 | 5 | 1 | 3 |
| 5 | (4) | 2 | 3 | 6 | 1 |
| 6 | (5) | (1) | 4 | 2 | 3 |

# FIG.19

110c

| | | | | | |
|---|---|---|---|---|---|
| 1 | (4) | (6) | (2) | (5) | (3) |
| 2 | (6) | 3 | 5 | 1 | 4 |
| 3 | (4) | 5 | 1 | 6 | 2 |
| 4 | 2 | 6 | 5 | 1 | 3 |
| 5 | 4 | 2 | 3 | 6 | 1 |
| 6 | 5 | 1 | 4 | 2 | 3 |

# FIG.20

110c

| | | | | | |
|---|---|---|---|---|---|
| 1 | 6 | | | | |
| 2 | 3 | 5 | 4 | | |
| 3 | 5 | 2 | | | |
| 4 | 2 | 5 | | | |
| 5 | 4 | 2 | 3 | | |
| 6 | 1 | | | | |

# FIG.21

110c

| | | | | | |
|---|---|---|---|---|---|
| 1 | 6 | | | | |
| 2 | 3 | | | | |
| 3 | 2 | | | | |
| 4 | 5 | | | | |
| 5 | 4 | | | | |
| 6 | 1 | | | | |

# FIG.22

# FIG.23

110a

| DATA IDENTIFIER | RECORD DATA |
|---|---|
| 001 | (2.0, 4.1, 6.4) |
| 002 | (24.2, 14.3, 96, 6) |
| 003 | (20.8, 6.6, 7.9) |
| 004 | (120.8, 16.6, 17.9) |
| . . . | . . . |

# FIG.24

110d

| DATA IDENTIFIER | ARRANGEMENT DESTINATION |
|---|---|
| 001 | CALCULATION RESOURCE S1 |
| 002 | CALCULATION RESOURCE S3 |
| 003 | CALCULATION RESOURCE S1 |
| 004 | NOT DETERMINED YET |
| . . . | . . . |

# FIG.25

START

ARRANGE RECORD DATA TO PLURALITY OF CALCULATION RESOURCES ～S101

RECEIVE ARRANGEMENT PROCESSING REQUEST AND THRESHOLD T0 FROM USER ～S102

MEASURE PROCESSING TIMES OF ALL RECORD DATA RELATIVE TO SINGLE PIECE OF QUERY DATA AND GENERATE INTERMEDIATE TABLE ～S103

SELECT EVEN NUMBER OF PIECES OF RECORD DATA, OF WHICH PROCESSING TIME EXCEEDS THRESHOLD T0, BASED ON INTERMEDIATE TABLE ～S104

GENERATE PAIR OF RECORD DATA WHICH ARE NOT SIMILAR TO EACH OTHER ～S105

OBTAIN STABLE MATCHING SOLUTION BASED ON SIMILARITY OF RECORD DATA ARRANGED TO CALCULATION RESOURCES TO DATA PAIR SO THAT DATA PAIR IS ARRANGED TO CALCULATION RESOURCE WHICH IS NOT SIMILAR TO SAME ～S106

GENERATE ARRANGEMENT DESTINATION INFORMATION BASED ON STABLE MATCHING SOLUTION ～S107

ARRANGE PAIR OF RECORD DATA TO CALCULATION RESOURCES BASED ON ARRANGEMENT DESTINATION INFORMATION ～S108

END

# FIG.26

COMPUTER 200

| CPU 201 | INPUT DEVICE 202 | DISPLAY 203 | READING DEVICE 204 | INTERFACE DEVICE 205 |
|---|---|---|---|---|

BUS 208

## RAM 206

### DATA PAIR GENERAT-ING PROCESS 206a

### MATCHING PROC-ESSING PROCESS 206b

### DATA ARRANGING PROCESSING PROCESS 206c

## HARD DISK DRIVE 207

### DATA PAIR GENERAT-ING PROGRAM 207a

### MATCHING PROC-ESSING PROGRAM 207b

### DATA ARRANGING PROCESSING PROGRAM 207c

# FIG.27

Europäisches
Patentamt

European
Patent Office

Office européen
des brevets

# EUROPEAN SEARCH REPORT

**Application Number**

EP 16 16 0107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/067229 A1 (KONINKL PHILIPS ELECTRONICS NV [NL]; PHILIPS CORP [US]; VDOVJAK RICHAR) 17 June 2010 (2010-06-17)<br>* abstract *<br>* page 1, line 2 - page 3, line 18 *<br>* page 3, line 30 - page 11, line 16 *<br>----- | 1-12 | INV.<br>G06Q10/10<br>G06Q10/06 |
| X | US 2007/294432 A1 (TAKASE TOSHIRO [JP] ET AL) 20 December 2007 (2007-12-20)<br>* abstract *<br>* paragraph [0002] - paragraph [0029] *<br>* paragraph [0053] - paragraph [0195] *<br>----- | 1-12 | |
| A | JP 2005 141401 A (MITSUBISHI ELECTRIC CORP; MITSUBISHI ELECTRIC INF TECH)<br>2 June 2005 (2005-06-02)<br>* the whole document *<br>----- | 1-12 | |
| A | JP 2007 265206 A (MITSUBISHI ELECTRIC INF TECH) 11 October 2007 (2007-10-11)<br>* the whole document *<br>----- | 1-12 | |
| | | | **TECHNICAL FIELDS SEARCHED (IPC)**<br><br>G06Q |

The present search report has been drawn up for all claims

| Place of search | Date of completion of the search | Examiner |
|---|---|---|
| The Hague | 15 July 2016 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 0107

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2016

| Patent document cited in search report | | Publication date | Patent family member(s) | | Publication date |
|---|---|---|---|---|---|
| WO 2010067229 | A1 | 17-06-2010 | CN | 102246174 A | 16-11-2011 |
| | | | EP | 2377058 A1 | 19-10-2011 |
| | | | JP | 5547747 B2 | 16-07-2014 |
| | | | JP | 2012511762 A | 24-05-2012 |
| | | | US | 2011246237 A1 | 06-10-2011 |
| | | | WO | 2010067229 A1 | 17-06-2010 |
| US 2007294432 | A1 | 20-12-2007 | JP | 4256897 B2 | 22-04-2009 |
| | | | JP | 2008021295 A | 31-01-2008 |
| | | | US | 2007294432 A1 | 20-12-2007 |
| | | | US | 2008240445 A1 | 02-10-2008 |
| JP 2005141401 | A | 02-06-2005 | NONE | | |
| JP 2007265206 | A | 11-10-2007 | JP | 4465328 B2 | 19-05-2010 |
| | | | JP | 2007265206 A | 11-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006260511 A
- JP 2011086019 A
- JP 2010010847 A
- JP 2001160062 A